# EUROPÄISCHE PATENTSCHRIFT

(11) **EP 3 992 021 B1**
(45) Veröffentlichungstag und Bekanntmachung des Hinweises auf die Patenterteilung: **31.12.2025**
(21) Anmeldenummer: 21206075.0
(22) Anmeldetag: 02.11.2021
(51) Int. Cl.: B60L 53/30, B60L 53/14, B60L 53/16, B60L 53/18, B60L 53/60

(54) **ELEKTRISCHE LADESTATION, FAHRZEUG, ELEKTRISCHES LADEKABEL, VERWENDUNG DES ELEKTRISCHEN LADEKABELS SOWIE SYSTEM**
ELECTRICAL CHARGING STATION, VEHICLE, ELECTRIC CHARGING CABLE, USE OF THE ELECTRIC CHARGING CABLE AND SYSTEM
STATION DE RECHARGE ÉLECTRIQUE, VÉHICULE, CÂBLE DE RECHARGE ÉLECTRIQUE, UTILISATION DU CÂBLE DE RECHARGE ÉLECTRIQUE, AINSI QUE SYSTÈME

(30) Priorität: 03.11.2020 DE 102020128967
(43) Veröffentlichungstag der Anmeldung: 04.05.2022
(73) Patentinhaber: Westenergie AG, 45128 Essen (DE)
(72) Erfinder: HERR, Stefan, 40477 Düsseldorf (DE); KLEDEWSKI, Ingo, 44319 Dortmund (DE)
(74) Vertreter: Bals & Vogel Patentanwälte PartGmbB

(56) Entgegenhaltungen:
- EP-A1- 3 616 977
- EP-B1- 2 487 839
- WO-A1-2020/174053
- DE-A1- 102017 126 781
- DE-A1- 102017 214 071
- DE-T5- 112010 003 507
- US-B2- 9 614 585
- "IEEE Vision for Smart Grid Communications: 2030 and Beyond;IEEE Vision for Smart Grid Communications: 2030 and Beyond", IEEE STANDARD, IEEE, PISCATAWAY, NJ, USA, 31 May 2013 (2013-05-31), pages 1 - 390, XP068055752, ISBN: 978-0-7381-8460-9

## Beschreibung

Die Erfindung betrifft eine elektrische Ladestation zum elektrischen Laden einer Traktionsbatterie eines Fahrzeugs, ein Fahrzeug mit einer Traktionsbatterie, die mittels einer elektrischen Ladestation elektrisch ladbar ist, ein elektrisches Ladekabel zum Verbinden einer elektrischen Ladestation mit einem Fahrzeug umfassend eine Traktionsbatterie, ein System aus der elektrischen Ladestation, dem Fahrzeug und/oder dem elektrischen Ladekabel sowie ein Verfahren zum Übertragen von Daten im Rahmen einer Fahrzeugkommunikation zwischen einer elektrischen Ladestation und einem Fahrzeug.

Es ist allgemein bekannt, eine (Fahrzeug-) Kommunikation zwischen einer elektrischen Ladestation und einem Fahrzeug mithilfe eines PWM-Signals (PWM steht als Abkürzung für Pulsweitenmodulation) durchzuführen. Hierzu wird das PWM-Signal zwischen dem Fahrzeug mit einer Traktionsbatterie, also etwa einem Elektrofahrzeug oder einem Plug-In Hybrid-Fahrzeug, und einer elektrischen Ladestation über eine sogenannte CP-Leitung (CP für Control Pilot) in einem elektrischen Ladekabel, welches an das Fahrzeug und an die elektrische Ladestation angeschlossen wird, übertragen. Mittels des PWM-Signals können Zustandsinformationen bidirektional übertragen werden. Die Kommunikation/Fahrzeugkommunikation mithilfe eines PWM-Signals ist insbesondere im Standard IEC 61851-1:2017 definiert.

Allerdings können mittels des PWM-Signals keine anderen als die Zustandsinformationen, also keine individuellen Daten bzw. Nachrichten, zwischen der elektrischen Ladestation und dem Fahrzeug übertragen werden. Solche individuellen Nachrichten können beispielsweise von einer Applikation auf der elektrischen Ladestation stammen, die ein Betreiber der elektrischen Ladestationen erstellt hat.

Damit individuelle Nachrichten im Rahmen einer Fahrzeugkommunikation übertragen werden können, ermöglicht der Standard nach ISO 15118-3:2015 eine Fahrzeugkommunikation mithilfe einer Powerline-Communication (abgekürzt PLC). Das PLC-Signal wird ebenso über die CP-Leitung übermittelt. Die Anforderungen für das PLC-Signal sind beispielsweise im Standard ISO 15118-3:2015 enthalten.

In DE 10 2013 205 088 A1 ist beispielsweise eine Kommunikationsvorrichtung für ein PLC-Signal einer Fahrzeugkommunikation offenbart. Ein wesentlicher Nachteil an einer PLC-Fahrzeugkommunikation ist jedoch, dass die PLC-Kommunikationsschnittstelle relativ teuer ist, da die PLC-Kommunikation nur wenig verbreitet ist. Zusätzlich ist die Leistungsaufnahme einer PLC-Kommunikation relativ hoch. US 9 614 585 B2, DE 11 2010 003507 T5 offenbaren jeweils Ladestation zum elektrischen Laden einer Traktionsbatterie eines Fahrzeugs, wobei die elektrische Ladestation eine erste Kommunikationsschnittstelle und eine damit verbundene erste Kommunikationseinheit aufweist zur Kommunikation mit dem Fahrzeug. DE 10 2017 126781 A1 offenbart Kommunikation zwischen Steuermodul und Spannungswandler in einem Hybridfahrzeug. unterstützend Time-Sensitive Networking Ethernet-Standard.

Demnach ist es eine Aufgabe der Erfindung, die Fahrzeugkommunikation zwischen dem Fahrzeug und der elektrischen Ladestation zu verbessern, insbesondere eine kostengünstige und einfache Möglichkeit bereitzustellen, mittels derer individuelle Nachrichten bzw. Daten übertragen werden können, die mittels PWM nicht übertragen werden können.

Die voranstehende Aufgabe wird durch die Gegenstände der Patentansprüche, insbesondere durch eine elektrische Ladestation nach Anspruch 1, ein Fahrzeug nach Anspruch 3, ein System nach Anspruch 6 sowie ein Verfahren nach Anspruch 9 gelöst. Weitere Vorteile und Details der Erfindung ergeben sich aus den Unteransprüchen, der Beschreibung und den Zeichnungen. Dabei gelten Merkmale und Details, die im Zusammenhang mit der erfindungsgemäßen elektrischen Ladestation beschrieben sind, selbstverständlich auch im Zusammenhang mit dem erfindungsgemäßen Fahrzeug, dem erfindungsgemäßen elektrischen Ladekabel, dem erfindungsgemäßen System und dem erfindungsgemäßen Verfahren sowie jeweils umgekehrt, sodass bezüglich der Offenbarung zu den einzelnen Erfindungsaspekten stets wechselseitig Bezug genommen wird beziehungsweise werden kann.

Demnach wird die Aufgabe gemäß einem ersten Aspekt gelöst durch eine elektrische Ladestation zum elektrischen Laden einer Traktionsbatterie eines Fahrzeugs, wobei die elektrische Ladestation eine erste Kommunikationsschnittstelle und eine damit verbundene erste Kommunikationseinheit aufweist, worin die erste Kommunikationseinheit zur Kommunikation mittels Ethernet eingerichtet ist und die elektrische Ladestation dazu eingerichtet ist, eine Ethernet-Kommunikationsverbindung zu dem Fahrzeug aufzubauen.

Der Ethernet-Standard ist ein weit verfügbarer und etablierter Standard, der auch fernab von elektrischen Ladestationen eingesetzt wird. Seine Verwendung in der elektrischen Ladestation ermöglicht eine stabile und zuverlässige Fahrzeugkommunikation für die Übertragung der individuellen Daten bzw. Nachrichten, die nicht mittels des PWM-Signals übertragen werden können. Darüber hinaus ist die erste Kommunikationseinheit durch seine weite Verbreitung entsprechend kostengünstig erhältlich und dadurch kostengünstig in die elektrische Ladestation implementierbar. Auch die Leistungsaufnahme bei der Ethernet-Kommunikation fällt gegenüber einer PLC-Kommunikation vergleichsweise gering aus, sodass die Ethernet-Kommunikation gegenüber der Lösung mit der PLC-Kommunikation dabei hilft, dass Energie eingespart werden kann.

Die erste Kommunikationseinheit kann beispielsweise als ein Chip der elektrischen Ladestation ausgebildet und in dieser installiert sein. Insbesondere kann die erste Kommunikationseinheit auch als eine erste Ethernet-Kommunikationseinheit eingerichtet sein bzw. kann der Chip als ein Ethernet-Chip eingerichtet sein.

Die erste Kommunikationseinheit kann zwischen einer Steuereinheit der elektrischen Ladestation und der ersten Kommunikationsschnittstelle angeordnet sein. Die erste Kommunikationsschnittstelle kann insbesondere eine physische Schnittstelle für einen Ladestecker eines elektrischen Ladekabels zur Verbindung mit dem Fahrzeug sein. Mit anderen Worten kann die erste Kommunikationsschnittstelle zum Verbinden mit dem Ladestecker oder Stecken des Ladesteckers des elektrischen Ladekabels in die erste Kommunikationsschnittstelle eingerichtet sein. Mit noch anderen Worten ist die erste Kommunikationsschnittstelle für eine drahtgebundene Verbindung mit dem Fahrzeug eingerichtet, die vorliegend durch das elektrische Ladekabel hergestellt werden kann. Das elektrische Ladekabel kann hierzu zwei Ladestecker an seinen Enden aufweisen, wovon einer der beiden Ladestecker der Verbindung mit der elektrischen Ladestation und der andere der beiden Ladestecker der Verbindung mit dem Fahrzeug dient.

Es ist vorgesehen, dass die erste Kommunikationseinheit zur Unterstützung eines Time-Sensitive Networking Ethernet-Standards eingerichtet ist und die elektrische Ladestation dazu eingerichtet ist, eine Ethernet-Kommunikationsverbindung nach dem unterstützten Time-Sensitive Networking Ethernet-Standard mit dem Fahrzeug aufzubauen. Das Time-Sensitive Networking (kurz TSN) umfasst dabei viele verschiedene einzelne Standards. Es genügt bereits, wenn die erste Kommunikationseinheit zumindest einen dieser einzelnen Standards unterstützt. Gleichwohl kann natürlich vorgesehen sein, dass die erste Kommunikationseinheit mehrere oder alle dieser einzelnen Standards unterstützt und entsprechende Ethernet-Kommunikationsverbindungen mit dem Fahrzeug aufzubauen, wodurch eine hohe Versatilität der ersten Kommunikationseinheit erreicht wird. Eine TSN-Ethernet-Verbindung bietet den Vorteil, dass Nachrichten im Rahmen der Fahrzeugkommunikation deterministisch übertragen werden können. Dadurch ist eine echtzeitfähige Kommunikation zwischen der elektrischen Ladestation und dem Fahrzeug möglich. Dadurch können auch zeitkritische Nachrichten übertragen werden. Somit können Steuerbefehle, welche eine elektrische Leistungsübertragung, insbesondere einen Ladevorgang des Fahrzeugs an der elektrischen Ladestation, betreffen, vorteilhafterweise echtzeitfähig übertragen werden. Ebenso kann die elektrische Ladestation durch eine TSN-Ethernet-Verbindung an eine Vehicle-to-Grid-Applikation (Vehicle-to-Grid auch kurz als V2G bezeichnet) angebunden werden. Die V2G-Applikation kann auf einer lokalen Ebene stattfinden. Dies ist beispielsweise der Fall, wenn die V2G-Applikation durch ein lokales Lastmanagement innerhalb eines Ladeparks, beispielsweise eines Parkplatzes mit mehreren elektrischen Ladestationen an einem Netzanschluss, durchgeführt wird. Eine V2G-Applikation kann allerdings auch über ein Weitverkehrsnetz innerhalb eines Verteilnetzabschnitts durchgeführt werden.

Ferner ist vorgesehen, dass die erste Kommunikationsschnittstelle eine elektrische Kommunikationsschnittstelle ist. Die elektrische Kommunikationsschnittstelle kann also über ein Material verfügen, dass einen elektrischen Strom leitet. Beispielsweise kann das Material ein Metall oder eine Metalllegierung, wie beispielsweise Kupfer oder eine Kupferlegierung, sein. Selbstverständlich kann die erste Kommunikationsschnittstelle alternativ oder zusätzlich auch eine optische Kommunikationsschnittstelle sein. Der Vorteil der elektrischen Kommunikationsschnittstelle ist allerdings, dass dadurch eine Rückfalloption für eine auf elektrischen Signalen basierende Kommunikationsverbindung ermöglicht wird, falls die Kommunikation mittels Ethernet scheitern oder ausfallen sollte, weil diese beispielsweise fahrzeugseitig nicht unterstützt wird.

Auch kann vorgesehen sein, dass die elektrische Ladestation ferner zumindest eine zweite Kommunikationseinheit aufweist, die mit der ersten Kommunikationsschnittstelle verbunden ist und zur Kommunikation mittels eines anderen Kommunikationsstandards als Ethernet eingerichtet ist. Die zweite Kommunikationseinheit kann mit der ersten Kommunikationseinheit integral ausgebildet sein bzw. eine gemeinsame übergeordnete Einheit bilden. Mit anderen Worten kann eine gemeinsame Kommunikationseinheit den Ethernet-Standard und einen anderen Kommunikationsstandard unterstützen. Es kann sich also beispielsweise um einen Chip handeln, der beide Standards unterstützt bzw. Kommunikationen nach beiden Standards ermöglicht. Es kann aber auch vorgesehen sein, dass die zweite Kommunikationseinheit separat von der ersten Kommunikationseinheit ausgebildet ist, beispielsweise als ein weiterer Chip. Die zweite Kommunikationseinheit kann beispielsweise zwischen der Steuereinheit der elektrischen Ladestation und der ersten Kommunikationseinheit angeordnet sein. Dadurch kann die zumindest eine zweite Kommunikationseinheit vorteilhafterweise die bereits erwähnte Rückfalloption ausbilden. Dies ist insoweit besonders vorteilhaft, wenn die erste Kommunikationsschnittstelle als elektrische Kommunikationsschnittstelle ausgebildet ist.

Hierbei kann vorgesehen sein, dass zumindest eine zweite Kommunikationseinheit zur Kommunikation mittels Powerline Communication und/oder Pulsweitenmodulation eingerichtet ist. Insoweit kann auf eine dieser an sich verbreiteten Kommunikationsmöglichkeiten zumindest als Rückfalloption zurückgegriffen werden und für eine Überbrückung bis zur Verbreitung von Ethernet für die Fahrzeugkommunikation, also etwa der fahrzeugseitigen Implementation, genutzt werden. Dabei kann die zumindest eine zweite Kommunikationseinheit für PLC und PWM oder auch nur eines der beiden eingerichtet sein. Möglich ist auch, dass für PLC und PWM jeweils separate zweite Kommunikationseinheiten vorgesehen werden.

Gemäß einem zweiten Aspekt der Erfindung wird die eingangs erwähnte Aufgabe gelöst durch ein Fahrzeug mit einer Traktionsbatterie, die mittels einer elektrischen Ladestation elektrisch ladbar ist, wobei das Fahrzeug eine zweite Kommunikationsschnittstelle und eine damit verbundene zweite Kommunikationseinheit aufweist, worin die zweite Kommunikationseinheit zur Kommunikation mittels Ethernet eingerichtet ist, und das Fahrzeug dazu eingerichtet ist, eine Ethernet-Kommunikationsverbindung zu der elektrischen Ladestation aufzubauen.

Das Fahrzeug ist insoweit komplementär zu der bereits erläuterten elektrischen Ladestation gemäß dem ersten Aspekt der Erfindung eingerichtet, um die Fahrzeugkommunikation mittels der Ethernet-Kommunikationsverbindung zu ermöglichen. Dadurch ergeben sich auch fahrzeugseitig die Vorteile, die bereits im Hinblick auf die elektrische Ladestation gemäß dem ersten Aspekt der Erfindung erläutert worden sind. Auch hier kann die dritte Kommunikationseinheit zwischen einer Steuereinheit des Fahrzeugs und der zweiten Kommunikationsschnittstelle angeordnet sein. Auch die dritte Kommunikationseinheit kann als ein Chip ausgebildet sein. Die dritte Kommunikationseinheit kann insbesondere eine zweite Ethernet-Kommunikationseinheit sein. Ferner kann die dritte Kommunikationseinheit beispielsweise als ein Ethernet-Chip ausgebildet sein.

Wie aus der Bezeichnung von an sich in ihrer Funktion als gleichartig betrachtbaren (wenn auch nicht notwendigerweise identisch aufgebauten) Komponenten wie der Kommunikationseinheit als erste, zweite, dritte usw. deutlich wird, ist diese Bezeichnung lediglich zur Unterscheidung der Komponenten im Rahmen dieser Beschreibung gedacht.

Aus der Bezeichnung lässt sich insoweit nicht auf den Schutzbereich der Patentansprüche schließen, die sich insoweit ausschließlich aus diesen ergeben. Wenn beispielsweise von der dritten Kommunikationseinheit in dem Fahrzeug gesprochen wird, ist es also beispielsweise nicht notwendig, dass auch die zuvor erwähnte zweite Kommunikationseinheit in der elektrischen Ladestation vorhanden ist. Es handelt sich bei dieser Bezeichnung insoweit, wie beschrieben, lediglich um ein Mittel zur Unterscheidung der Komponenten voneinander.

Das Fahrzeug ist mit einer Traktionsbatterie ausgestattet und kann insoweit elektrisch bzw. mit Strom aus der Traktionsbatterie fahren. Das Fahrzeug kann also beispielsweise als ein Elektrofahrzeug, also ein Fahrzeug nur mit elektrischem Antrieb, ausgebildet sein. Das Fahrzeug kann alternativ aber auch beispielsweise als ein Plug-In Hybridfahrzeug ausgebildet sein, das neben dem elektrischen Antrieb auch einen anderen Antrieb, beispielsweise in Form eines Verbrennungsmotors oder eines Brennstoffzellenantriebs, umfasst.

Es ist vorgesehen, dass die dritte Kommunikationseinheit zur Unterstützung eines Time-Sensitive Networking Ethernet-Standards eingerichtet ist und das Fahrzeug dazu eingerichtet ist, eine Ethernet-Kommunikationsverbindung nach dem unterstützten Time-Sensitive Networking Ethernet-Standard mit der elektrischen Ladestation aufzubauen. Das Time-Sensitive Networking (kurz TSN) umfasst dabei viele verschiedene einzelne Standards. Es genügt bereits, wenn die dritte Kommunikationseinheit zumindest einen dieser einzelnen Standards unterstützt. Gleichwohl kann natürlich vorgesehen sein, dass die dritte Kommunikationseinheit mehrere oder alle dieser einzelnen Standards unterstützt und entsprechende Ethernet-Kommunikationsverbindungen mit der elektrischen Ladestation aufzubauen, wodurch eine hohe Versatilität der dritten Kommunikationseinheit erreicht wird. Eine TSN Ethernet-Verbindung bietet den Vorteil, dass Nachrichten im Rahmen der Fahrzeugkommunikation deterministisch übertragen werden können. Dadurch ist eine echtzeitfähige Kommunikation zwischen der elektrischen Ladestation und dem Fahrzeug möglich. Dadurch können auch zeitkritische Nachrichten übertragen werden. Somit können Steuerbefehle, welche eine elektrische Leistungsübertragung, insbesondere einen Ladevorgang des Fahrzeugs an der elektrischen Ladestation, betreffen, vorteilhafterweise echtzeitfähig übertragen werden. Ebenso kann das Fahrzeug durch eine TSN Ethernet-Verbindung an eine Vehicle-to-Grid-Applikation (Vehicle-to-Grid auch kurz als V2G bezeichnet) angebunden werden. Die V2G-Applikation kann auf einer lokalen Ebene stattfinden. Dies ist beispielsweise der Fall, wenn die V2G-Applikation durch ein lokales Lastmanagement innerhalb eines Ladeparks, beispielsweise eines Parkplatzes mit mehreren elektrischen Ladestationen an einem Netzanschluss, durchgeführt wird. Eine V2G-Applikation kann allerdings auch über ein Weitverkehrsnetz innerhalb eines Verteilnetzabschnitts durchgeführt werden.

Es ist vorgesehen, dass die zweite Kommunikationsschnittstelle eine elektrische Kommunikationsschnittstelle ist. Die elektrische Kommunikationsschnittstelle kann also über ein Material verfügen, das einen elektrischen Strom leitet. Beispielsweise kann das Material ein Metall oder eine Metalllegierung, wie beispielsweise Kupfer oder eine Kupferlegierung, sein. Die zweite Kommunikationsschnittstelle ist zusätzlich auch eine optische Kommunikationsschnittstelle. Der Vorteil der elektrischen Kommunikationsschnittstelle ist allerdings, dass dadurch eine Rückfalloption für eine auf elektrischen Signalen basierende Kommunikationsverbindung ermöglicht wird, falls die Kommunikation mittels Ethernet scheitern oder ausfallen sollte, weil diese beispielsweise seitens der elektrischen Ladestation nicht unterstützt wird.

Im Übrigen kann vorgesehen sein, dass das Fahrzeug ferner zumindest eine vierte Kommunikationseinheit aufweist, die mit der zweiten Kommunikationsschnittstelle verbunden ist und zur Kommunikation mittels eines anderen Kommunikationsstandards als Ethernet eingerichtet ist. Die vierte Kommunikationseinheit kann mit der dritten Kommunikationseinheit integral ausgebildet sein bzw. eine gemeinsame übergeordnete Einheit bilden. Mit anderen Worten kann eine gemeinsame Kommunikationseinheit den Ethernet-Standard und einen anderen Kommunikationsstandard unterstützen. Es kann sich also beispielsweise um einen Chip handeln, der beide Standards unterstützt bzw. Kommunikationen nach beiden Standards ermöglicht. Es kann aber auch vorgesehen sein, dass die vierte Kommunikationseinheit separat von der zweiten Kommunikationseinheit ausgebildet ist, beispielsweise als ein weiterer Chip. Die vierte Kommunikationseinheit kann beispielsweise zwischen der Steuereinheit des Fahrzeugs und der dritten Kommunikationseinheit angeordnet sein. Dadurch kann die zumindest eine vierte Kommunikationseinheit vorteilhafterweise die bereits erwähnte Rückfalloption ausbilden.

Dies ist insoweit besonders vorteilhaft, wenn die zweite Kommunikationsschnittstelle als elektrische Kommunikationsschnittstelle ausgebildet ist.

Hierbei kann vorgesehen sein, dass die zumindest eine vierte Kommunikationseinheit zur Kommunikation mittels Powerline Communication und/oder Pulsweitenmodulation eingerichtet ist. Insoweit kann auf eine dieser an sich verbreiteten Kommunikationsmöglichkeiten zumindest als Rückfalloption zurückgegriffen werden und für eine Überbrückung bis zur Verbreitung von Ethernet für die Fahrzeugkommunikation, also etwa der ladestationsseitigen Implementation, genutzt werden. Dabei kann die zumindest eine vierte Kommunikationseinheit für PLC und PWM oder auch nur eines der beiden eingerichtet sein. Möglich ist auch, dass für PLC und PWM jeweils separate vierte Kommunikationseinheiten vorgesehen werden.

Gemäß einem dritten Aspekt der Erfindung wird die eingangs erwähnte Aufgabe gelöst durch ein System aufweisend die Ladestation, das Fahrzeug, und ein elektrisches Ladekabel zum Verbinden der erelektrischen Ladestation mit dem Fahrzeug umfassend eine Traktionsbatterie, wobei das elektrische Ladekabel zumindest eine elektrische Ladeleitung zum elektrischen Laden des Fahrzeugs mittels der elektrischen Ladestation aufweist und das elektrische Ladekabel vier Kommunikationsleitungen zur Kommunikation zwischen der elektrischen Ladestation und dem Fahrzeug aufweist, wobei die vier Kommunikationsleitungen für eine Ethernet-Kommunikationsverbindung zwischen der elektrischen Ladestation und dem Fahrzeug eingerichtet sind.

Das elektrische Ladekabel ist insoweit komplementär zu der bereits erläuterten elektrischen Ladestation gemäß dem ersten Aspekt der Erfindung sowie zu dem bereits erläuterten Fahrzeug gemäß dem zweiten Aspekt der Erfindung eingerichtet, um die Fahrzeugkommunikation mittels der Ethernet-Kommunikationsverbindung zu ermöglichen. Dadurch ergeben sich die bereits erläuterten Vorteile.

Es kann vorgesehen sein, dass zwei der vier Kommunikationsleitungen zum Senden von Daten und die beiden anderen der vier Kommunikationsleitungen zum Empfangen von Daten eingerichtet sind. Insbesondere können die vier Kommunikationsleitungen in physische Kommunikations- bzw. Datenleitungen für TX-, TX+, RX- und RX+ unterteilt werden. Diese vier Kommunikationsleitungen sind für die Kommunikation mittels Ethernet erforderlich. RX bezeichnet dabei jeweils für die Empfangsdatenleitungen, also deren Eingang (R für "receive" im Englischen). TX bezeichnet dabei jeweils die Sendedatenleitungen, also deren Ausgang (T für "transmit" im Englischen). TX und RX werden dabei jeweils differentiell auf zwei Leitungen, auch als Adern bezeichenbar, übertragen.

Auch kann vorgesehen sein, dass die vier Kommunikationsleitungen an ihren Enden auf einer Fläche eines elektrischen Kontaktstifts des elektrischen Ladekabels angeordnet sind. Bei diesem Kontaktstift kann es sich in dem Ladestecker des elektrischen Ladekabels um den sog. CP-Stift, also den Control Pilot-Stift handeln, mittels dem Daten zwischen dem Fahrzeug und der elektrischen Ladestation bzw. zwischen deren Steuereinheiten ausgetauscht werden können. Der Stift kann auch als Pin oder Ende einer Kommunikationsleitung in dem elektrischen Ladekabel verstanden werden. In diesem Falle sind alle vier Kommunikationsleitungen für die Ethernet-Verbindung an dem CP-Stift zusammengeführt. Selbstverständlich kann dies an beiden Ladesteckern bzw. Enden des elektrischen Ladekabels der Fall sein. Mit anderen Worten ist dies an dem CP-Stift in dem Ladestecker zur elektrischen Ladestation und in dem CP-Stift in dem Ladestecker zum Fahrzeug der Fall. Der Stift kann dabei einen runden Querschnitt haben. Mit anderen Worten kann die (stirnseitige) Fläche des Stifts kreisförmig sein. Demnach können die vier Kommunikationsleitungen an ihren Enden auf einer Kreisfläche des Stifts bzw. der beiden Stifte des elektrischen Ladekabels angeordnet sein. Mögliche Ausführungsformen des Stifts bzw. des Ladekabels sowie der Aufbau der Ladestecker werden später anschaulich mit Bezug auf die beigefügten Figuren näher erläutert.

Gemäß einem vierten Aspekt der Erfindung wird die eingangs erwähnte Aufgabe gelöst durch ein System aus einer elektrischen Ladestation nach dem ersten Aspekt der Erfindung, einem Fahrzeug nach dem zweiten Aspekt der Erfindung und einem elektrischen Ladekabel nach dem dritten Aspekt der Erfindung. Mit anderen Worten kann das System aus der elektrischen Ladestation und dem Fahrzeug, und dem elektrischen Ladekabel bestehen.

Gemäß einem fünften Aspekt der Erfindung wird die eingangs erwähnte Aufgabe gelöst durch ein Verfahren zum Übertragen von Daten im Rahmen einer Fahrzeugkommunikation zwischen einer elektrischen Ladestation und einem Fahrzeug mit einer Traktionsbatterie, wobei die Fahrzeugkommunikation mittels einer Ethernet-Kommunikationsverbindung erfolgt.

Der wesentliche Schritt des Verfahrens ist also das Übertragen von Daten im Rahmen der Fahrzeugkommunikation mittels der Ethernet-Kommunikationsverbindung. Selbstverständlich kann das Verfahren auch weitere Schritte aufweisen, die den Aufbau der Ethernet-Kommunikationsverbindung betreffen.

Insbesondere kann das Verfahren bei einer elektrischen Ladestation nach dem ersten Aspekt der Erfindung und/oder bei einem Fahrzeug nach dem zweiten Aspekt der Erfindung durchgeführt werden. Alternativ oder zusätzlich kann das elektrische Ladekabel nach dem dritten Aspekt der Erfindung für eine drahtgebundene Verbindung zwischen der elektrischen Ladestation und dem Fahrzeug in dem Verfahren verwendet werden. Insbesondere kann das Verfahren in dem System nach dem vierten Aspekt der Erfindung ausgeführt werden.

Es ist vorgesehen, dass die Daten mittels einer Ethernet-Kommunikationsverbindung nach dem Time-Sensitive Networking Ethernet-Standard zwischen der elektrischen Ladestation und dem Fahrzeug übertragen werden. Das Time-Sensitive Networking umfasst verschiedene einzelne Standards. Beim Verfahren kann die Nutzung eines beliebigen dieser einzelnen TSN-Standards vorgesehen sein. Die TSN Ethernet-Verbindung bietet den Vorteil, dass Nachrichten im Rahmen der Fahrzeugkommunikation deterministisch übertragen werden können. Dadurch ist eine echtzeitfähige Kommunikation zwischen der elektrischen Ladestation und dem Fahrzeug möglich. Dadurch können auch zeitkritische Nachrichten übertragen werden. Somit können Steuerbefehle, welche eine elektrische Leistungsübertragung, insbesondere einen Ladevorgang des Fahrzeugs an der elektrischen Ladestationen, betreffen, vorteilhafterweise echtzeitfähig übertragen werden. Ebenso kann das Fahrzeug durch eine TSN Ethernet-Verbindung an eine Vehicle-to-Grid-Applikation angebunden werden. Die V2G-Applikation kann auf einer lokalen Ebene stattfinden. Dies ist beispielsweise der Fall, wenn die V2G-Applikation durch ein lokales Lastmanagement innerhalb eines Ladeparks, beispielsweise eines Parkplatzes mit mehreren elektrischen Ladestationen an einem Netzanschluss, durchgeführt wird. Eine V2G-Applikation kann allerdings auch über ein Weitverkehrsnetz innerhalb eines Verteilnetzabschnitts durchgeführt werden.

Dabei kann vorgesehen sein, dass sicherheitskritische Befehle oder Informationen als Daten mittels der Ethernet-Kommunikationsverbindung nach dem Time-Sensitive Networking Ethernet-Standard zwischen der elektrischen Ladestation und dem Fahrzeug übertragen werden. Sicherheitskritische Befehle oder Informationen können Steuerbefehle, welche eine elektrische Leistungsübertragung betreffen, sein. Beispielsweise kann ein sicherheitskritischer Befehl ein Befehl sein, welcher einen AC/DC- Wandler (auch Gleichrichter genannt) steuern soll. Durch die TSN Ethernet-Verbindung ist vorteilhafterweise eine niedrige Latenzzeit für sicherheitskritische Befehle oder Informationen möglich. Dadurch kann eine Reaktionszeit in sicherheitskritischen Situationen bzw. bei sicherheitskritischen Vorfällen reduziert werden, welches die funktionale Sicherheit für einen Nutzer der elektrischen Ladestation verbessert.

Zusätzlich oder alternativ kann vorgesehen sein, dass Multimedia-Daten mittels der Ethernet-Kommunikationsverbindung nach dem Time-Sensitive Networking Ethernet-Standard zwischen der elektrischen Ladestation und dem Fahrzeug übertragen werden. Die Multimedia-Daten sind keine Daten, welche zum Steuern eines Ladevorgangs verwendet werden. Die Multimedia-Daten können vorteilhafterweise dazu verwendet werden, visuelle Inhalte, etwa Bilder, Musikdateien und/oder Videos, während eines Ladevorgangs zwischen einer Ladestation und einem Fahrzeug auszutauschen. Dadurch kann ein Nutzer während eines Ladevorgangs beispielsweise ein Video in einem zu ladenden Fahrzeug bzw. auf einem darin befindlichen Bildschirm betrachten, wobei die das Video betreffenden Dateien über die TSN Ethernet-Verbindung übertragen werden.

Weitere, die Erfindung verbessernde Maßnahmen ergeben sich aus der nachfolgenden Beschreibung zu einigen Ausführungsbeispielen der Erfindung, welche in den Figuren dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich, als auch in den verschiedenen Kombinationen erfindungswesentlich sein. Es zeigen jeweils schematisch:
- Fig. 1: eine Ansicht eines Ausführungsbeispiels eines erfindungsgemäßen Systems;
- Fig. 2a: eine Darstellung einer ersten Ausführungsform eines Ladesteckers des elektrischen Ladekabels aus Fig. 1;
- Fig. 2b: eine Darstellung einer zweiten Ausführungsform eines Ladesteckers des elektrischen Ladekabels aus Fig. 1;
- Fig. 3a: eine Darstellung einer ersten Ausführungsform eines CP-Stifts des Ladesteckers aus Fig. 2; und
- Fig. 3b: eine Darstellung einer zweiten Ausführungsform eines CP-Stifts des Ladesteckers aus Fig. 2

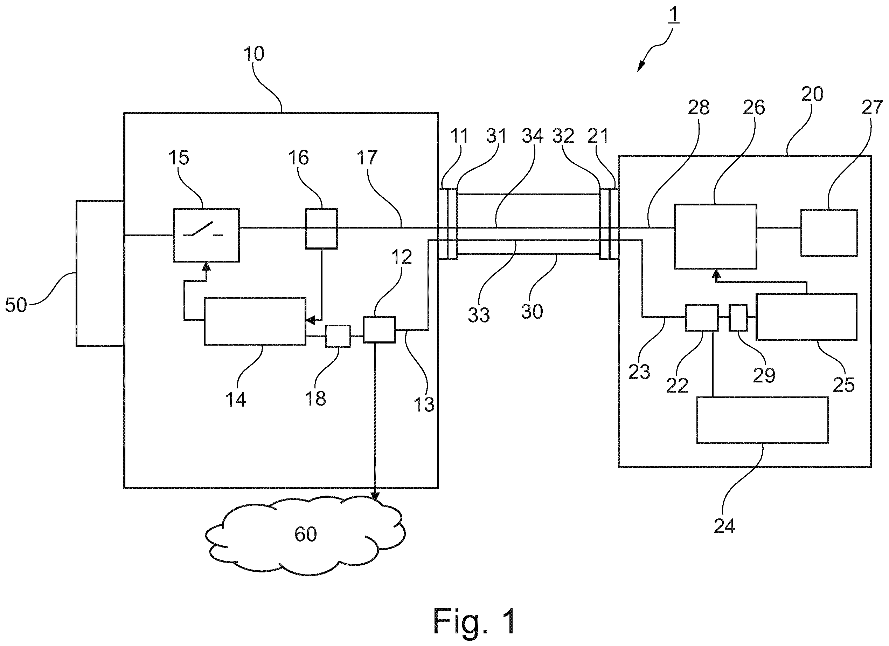

Elemente mit gleicher Funktion und Wirkungsweise sind in den Figuren 1 bis 3b jeweils mit denselben Bezugszeichen versehen.

Figur 1 zeigt ein System 1 nach einem Ausführungsbeispiel der Erfindung. Das System 1 weist eine elektrische Ladestation 10 nach einem Ausführungsbeispiel der Erfindung, ein elektrisches Ladekabel 30 nach einem Ausführungsbeispiel der Erfindung und ein Fahrzeug 20 nach einem Ausführungsbeispiel der Erfindung auf.

Das elektrische Ladekabel 30 verbindet das Fahrzeug 20 mit der elektrischen Ladestation 10 zum Zwecke eines Ladevorgangs. Beim Ladevorgang wird die Traktionsbatterie 27 des Fahrzeugs 20 aufgeladen, welches insbesondere als ein Elektrofahrzeug ausgebildet sein kann. Die elektrische Ladestation 10 verfügt hierzu über eine erste Ladeleitung 17 bzw. Stromleitung. Diese erste Ladeleitung 17 ist mit einer dritten Ladeleitung 34 bzw. Stromleitung des elektrischen Ladekabels 30 gekoppelt. Die dritte Ladeleitung 34 wiederum ist mit einer zweiten Ladeleitung 28 bzw. Stromleitung des Fahrzeugs 20 gekoppelt. Die zweite Ladeleitung 28 führt zu der Traktionsbatterie 27. Das Fahrzeug 20 weist vorliegend einen Gleichrichter 26 auf, der vor der Traktionsbatterie 27 in der zweiten Ladeleitung 28 angeordnet ist.

Der Ladevorgang des Fahrzeugs 20 kann gesteuert werden. Hierzu weisen einerseits die elektrische Ladestation 10 eine erste Steuereinheit 14 und andererseits das Fahrzeug 20 eine zweite Steuereinheit 25 auf. Die erste Steuereinheit 14 ist mit einer Schaltereinheit 15 der elektrischen Ladestation 10 verbunden. Die Schaltereinheit 15 ist in der ersten Ladeleitung 17 angeordnet. Mittels der Schaltereinheit 15 kann der Stromfluss von dem Versorgungsnetz 50 zu der Traktionsbatterie 27 des Fahrzeugs 20 gesteuert, insbesondere geregelt werden. Beispielsweise kann die Schaltereinheit 15 öffnen und schließen, um Stromfluss zu erlauben oder zu verhindern. Dazu erhält die Schaltereinheit 15 Steuersignale von der ersten Steuereinheit 14. Eine Messeinheit 16 befindet sich hinter der Schaltereinheit 15 in der ersten Ladeleitung 17. Die Messeinheit 16 kann alternativ aber auch vor der Schaltereinheit 15 angeordnet sein. Die Messeinheit 16 misst den durch die erste Ladeleitung 17 fließenden Strom und koppelt die Messergebnisse in Form von Messsignalen zur Steuerung und/oder Regelung der ersten Steuereinheit 14 an diese zurück. Auf Seiten des Fahrzeugs 20 steuert die zweite Steuereinheit 25 mittels Steuersignalen den Gleichrichter 26.

Neben der elektrischen Ladeverbindung mittels der elektrischen Ladeleitungen 17, 28, 34 verfügt das System 1 über eine Kommunikationsverbindung bzw. Fahrzeugkommunikationsverbindung. Mittels der Fahrzeugkommunikation kann das Fahrzeug 20 mit der elektrischen Ladestation 10, insbesondere auch umgekehrt, kommunizieren. Dabei können Daten, beispielsweise in Form von Befehlen oder Informationen, ausgetauscht werden, die den Ladevorgang mittels der elektrischen Ladeverbindung betreffen. Jedoch können auch andere Daten, beispielsweise Multimediadaten, ausgetauscht werden.

Die Fahrzeugkommunikation wird über entsprechende Kommunikationseinheiten 12, 18, 22, 29 in der elektrischen Ladestation 10 bzw. dem Fahrzeug 20 bewerkstelligt. Vorliegend sind nur die erste Kommunikationseinheit 12 und die dritte Kommunikationseinheit 22 notwendig. Diese unterstützen einen Ethernet-Standard, insbesondere einen Time-Sensitive Networking (TSN) Ethernet-Standard. Die Ladestation 10 und das Fahrzeug 20 sind mittels ihrer jeweiligen Steuereinheiten 14, 25 miteinander verbunden. Die dritte Kommunikationseinheit 22 des Fahrzeugs 20 ist ferner mit einem Multimediasystem 24 verbunden, damit die zuvor angesprochenen Multimediadaten an dieses übertragen werden können.

Die erste Kommunikationseinheit 12 ist mittels eines Ladestation-Kommunikationskanals 13 mit einem Ladekabel-Kommunikationskanal 33 in dem elektrischen Ladekabel 30 verbunden. Das elektrische Ladekabel 30 ist dabei mittels eines ersten Ladesteckers 31 an seinem einen Ende mit einer ersten Kommunikationsschnittstelle 11, in die der Ladekabel-Kommunikationskanal 13 und auch die erste Ladeleitung 17 münden, verbunden. Wiederum ist die dritte Kommunikationseinheit 22 mittels eines Fahrzeug-Kommunikationskanals 23 mit dem Ladekabel-Kommunikationskanal 33 in dem elektrischen Ladekabel 30 verbunden. Auch der Fahrzeug-Kommunikationskanal 23 endet in einer entsprechenden zweiten Kommunikationsschnittstelle 21, an die ein zweiter Ladestecker 32 des elektrischen Ladekabels 30 angesteckt ist bzw. mit jener verbunden ist.

Mittels der derart eingerichteten Fahrzeugkommunikationsverbindung in Form einer TSN Ethernet-Verbindung zwischen der elektrischen Ladestation 10 und dem Fahrzeug 20 kann eine echtzeitfähige Kommunikation mit dem Austausch sicherheitskritischer Befehle zwischen den Steuereinheiten 14, 25 ermöglicht werden. Hierneben können auch Multimediadaten von der elektrischen Ladestation 10 an das Multimediasystem 24 des Fahrzeugs 20 übertragen werden. Auch eine Vehicle-to-Grid-Applikation 60 wird dank der TSN Ethernet-Verbindung ermöglicht.

Die zweite Kommunikationseinheit 18 in der elektrischen Ladestation 10 sowie die vierte Kommunikationseinheit 29 in dem Fahrzeug 20 sind optional. Sie unterstützt einen anderen Kommunikationsstandard als Ethernet, beispielsweise Pulsweitenmodulation und/oder Powerline Communication. Damit dienen die Kommunikationseinheiten 18, 29 als Rückfalllösung für den Fall, dass die Ethernet-Kommunikation nicht möglich sein sollte, weil beispielsweise die erste Kommunikationseinheit 12 oder die dritte Kommunikationseinheit 22 nicht vorhanden sein sollte.

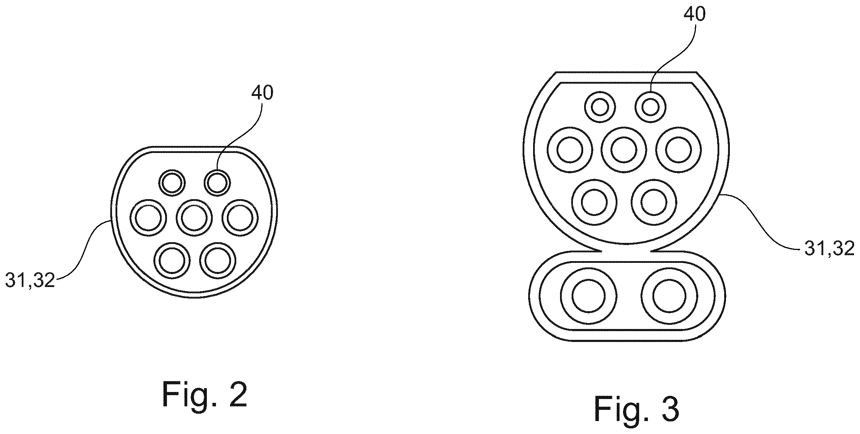

Figur 2a zeigt eine Frontansicht beider Ladestecker 31, 32 des elektrischen Ladekabels 30 der Fig. 1. Der Ladestecker ist hier gemäß IEC 62196 Typ 2 ausgebildet. Ein elektrischer Kontaktstift bzw. CP-Stift 40 befindet sich am Ende des Ladekabel-Kommunikationskanals 33, der seinerseits vier Kommunikationsleitungen 41, 42, 43, 44 aufweist, die an der Stirnseite des CP-Stifts 40 münden.

Figur 2b zeigt eine alternative Ausführungsform beider Ladestecker 31, 32 des elektrischen Ladekabels 30 der Fig. 1, in der wiederum der CP-Stift 40 gekennzeichnet ist. Der Unterschied dieser Ladestecker 31, 32 gegenüber derer aus Fig. 2a besteht darin, dass diese vom Typ CCS sind bzw. CCS-Stecker sind.

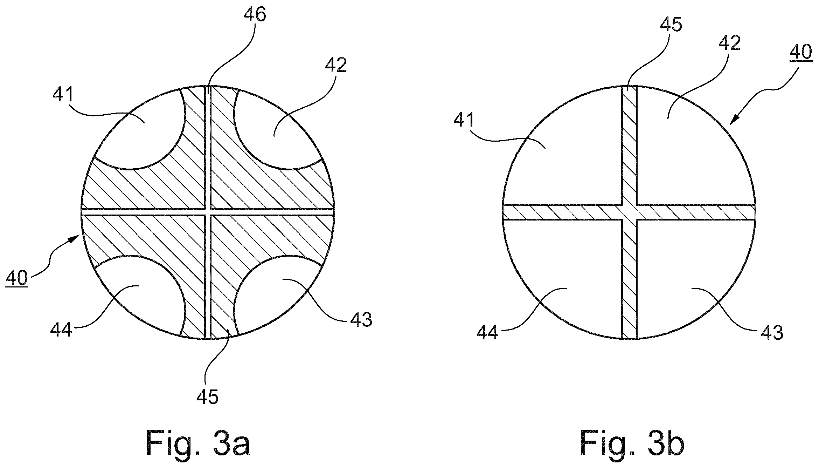

Figuren 3a und 3b zeigen unterschiedliche Ausführungsformen der CP-Stifte 40 und damit der Enden des Ladekabel-Kommunikationskanals 33. Die Figuren 3a und 3b sind beispielhafte Ansichten eines jeweiligen CP-Stifts 40. Der CP-Stift 40 bzw. eine CP-Kontaktstelle am Ende des Ladekabel-Kommunikationskanals 33 umfasst vorliegend vier Kommunikationsleitungen 41, 42, 43, 44, die als Kontakte in den CP-Stift 40 münden. Diese sind vorliegend aus Kupfer ausgebildet. Sie repräsentieren Kommunikationsleitungen für TX-, TX+, RX-, RX+ einer Ethernet-Verbindung.

Die vier Kommunikationsleitungen 41, 42, 43, 44 bzw. Kommunikationskontakte sind vorliegend durch eine Isolation 45, insbesondere aus einem nichtleitenden Material, voneinander isoliert. Ein nichtleitendes Material kann beispielsweise ein Polymer sein. Ferner können die vier Kommunikationsleitungen 41, 42, 43, 44 bzw. Kommunikationskontakte mit einer Schirmung 46 versehen sein, wie sie in der Fig. 3a beispielhaft gezeigt ist. Die Schirmung 46 wird vorliegend durch ein metallisches Material erzielt. Wenn ein Kommunikationsteilnehmer, also entweder elektrische Ladestation 10 oder Fahrzeug 20, keine Ethernet-Verbindung unterstützt, kann in Rahmen der Rückfalloption beispielsweise eine PLC-Kommunikationsverbindung über alle vier Kommunikationsleitungen 41, 42, 43, 44 bzw. Kommunikationskontakte durchgeführt werden.

In der Fig. 3a sind die Kommunikationsleitungen 41, 42, 43, 44 bzw. Kommunikationskontakte auf dem Umfang des CP-Stifts 40 angeordnet und bilden teilkreis- oder ovalförmige Segmente im Querschnitt des CP-Stifts 40 aus. Zur Mitte des CP-Stifts 40 hin verläuft die Isolation 45, die wiederum durch eine kreuzförmige Anordnung der Schirmung 46 unterbrochen wird.

In der Fig. 3b sind die Kommunikationsleitungen 41, 42, 43, 44 bzw. Kommunikationskontakte ebenfalls auf dem Umfang des CP-Stifts 40 angeordnet und bilden Segmente in Form von Viertelkreisflächen im Querschnitt des CP-Stifts 40. Unterbrochen werden die Kommunikationsleitungen 41, 42, 43, 44 bzw. Kommunikationskontakte von der kreuzförmigen Isolation 45. Bei Bedarf kann zur Verhinderung elektromagnetischer Einflüsse bzw. Strahlung der Kommunikationsleitungen 41, 42, 43, 44 bzw. Kommunikationskontakte aufeinander auch bei dem CP-Stift 40 aus der Fig. 3b. eine Schirmung 46, beispielsweise ebenfalls kreuzförmig, vorgesehen werden.

In einer nicht dargestellten Ausführungsform können die vier Kommunikationsleitungen 41, 42, 43, 44 bzw. Kommunikationskontakte alternativ nur als Kontaktflächen auf einer Isolations-Ummantelung, insbesondere Polymer-Ummantelung, eines CP-Stifts 40 ausgebildet sein.

### Bezugszeichenliste

- 1: System
- 10: elektrische Ladestation
- 11: erste Kommunikationsschnittstelle
- 12: erste Kommunikationseinheit
- 13: Ladestation-Kommunikationskanal
- 14: erste Steuereinheit
- 15: Schaltereinheit
- 16: Messeinheit
- 17: erste Ladeleitung
- 18: zweite Kommunikationseinheit
- 20: Fahrzeug
- 21: zweite Kommunikationsschnittstelle
- 22: dritte Kommunikationseinheit
- 23: Fahrzeug-Kommunikationskanal
- 24: Multimediasystem
- 25: Steuereinheit
- 26: Gleichrichter
- 27: Traktionsbatterie
- 28: zweite Ladeleitung
- 29: vierte Kommunikationseinheit
- 30: elektrisches Ladekabel
- 31: erster Ladestecker
- 32: zweiter Ladestecker
- 33: Ladekabel-Kommunikationskanal
- 34: dritte Ladeleitung
- 40: elektrischer Kontaktstift, CP-Stift
- 41: erste Kommunikationsleitung
- 42: zweite Kommunikationsleitung
- 43: dritte Kommunikationsleitung
- 44: vierte Kommunikationsleitung
- 45: Isolation
- 46: Schirmung
- 50: Versorgungsnetz
- 60: Vehicle-to-Grid-Applikation

## Patentansprüche

1. Elektrische Ladestation (10) zum elektrischen Laden einer Traktionsbatterie (27) eines Fahrzeugs (20), wobei die elektrische Ladestation (10) eine erste Kommunikationsschnittstelle (11) und eine damit verbundene erste Kommunikationseinheit (12) aufweist, worin die erste Kommunikationseinheit (12) zur Kommunikation mittels Ethernet eingerichtet ist und die elektrische Ladestation (10) dazu eingerichtet ist, eine Ethernet-Kommunikationsverbindung zu dem Fahrzeug (20) aufzubauen, wobei die erste Kommunikationseinheit (12) zur Unterstützung eines Time-Sensitive Networking Ethernet-Standards eingerichtet ist und die elektrische Ladestation (10) dazu eingerichtet ist, eine Ethernet-Kommunikationsverbindung nach dem unterstützten Time-Sensitive Networking Ethernet-Standard mit dem Fahrzeug (20) aufzubauen, wobei die erste Kommunikationsschnittstelle (11) eine elektrische Kommunikationsschnittstelle und zusätzlich auch eine optische Kommunikationsschnittstelle ist.

2. Elektrische Ladestation (10) nach Anspruch 1, wobei die elektrische Ladestation (10) ferner zumindest eine zweite Kommunikationseinheit (18) aufweist, die mit der ersten Kommunikationsschnittstelle (11) verbunden ist und zur Kommunikation mittels eines anderen Kommunikationsstandards als Ethernet eingerichtet ist, wobei insbesondere die zumindest eine zweite Kommunikationseinheit (18) zur Kommunikation mittels Powerline Communication und/oder Pulsweitenmodulation eingerichtet ist.

3. Fahrzeug (20) mit einer Traktionsbatterie (27), die mittels einer elektrischen Ladestation (10) elektrisch ladbar ist, wobei das Fahrzeug (20) eine zweite Kommunikationsschnittstelle (21) und eine damit verbundene dritte Kommunikationseinheit (22) aufweist, worin die dritte Kommunikationseinheit (22) zur Kommunikation mittels Ethernet eingerichtet ist, das Fahrzeug (20) **dadurch gekennzeichnet, dass** es dazu eingerichtet ist, eine Ethernet-Kommunikationsverbindung zu der elektrischen Ladestation (10) aufzubauen, wobei die dritte Kommunikationseinheit (22) zur Unterstützung eines Time-Sensitive Networking Ethernet-Standards eingerichtet ist und das Fahrzeug (20) dazu eingerichtet ist, eine Ethernet-Kommunikationsverbindung nach dem unterstützten Time-Sensitive Networking Ethernet-Standard mit der elektrischen Ladestation (10) aufzubauen.

4. Fahrzeug (20) nach Anspruch 3, wobei die zweite Kommunikationsschnittstelle (21) eine elektrische Kommunikationsschnittstelle ist.

5. Fahrzeug (20) nach einem der Ansprüche 3 bis 4, wobei das Fahrzeug (20) ferner zumindest eine vierte Kommunikationseinheit (29) aufweist, die mit der zweiten Kommunikationsschnittstelle (21) verbunden ist und zur Kommunikation mittels eines anderen Kommunikationsstandards als Ethernet eingerichtet ist, wobei insbesondere die zumindest eine vierte Kommunikationseinheit (29) zur Kommunikation mittels Powerline Communication und/oder Pulsweitenmodulation eingerichtet ist.

6. System (1) aus einer elektrischen Ladestation (10) nach einem der Ansprüche 1 bis 2, einem Fahrzeug (20) nach einem der Ansprüche 3 bis 5 und einem elektrischen Ladekabel (30) zum Verbinden der elektrischen Ladestation (10) mit dem Fahrzeug (20) umfassend eine Traktionsbatterie (27), wobei das elektrische Ladekabel (30) zumindest eine elektrische Ladeleitung (34) zum elektrischen Laden des Fahrzeugs (20) mittels der elektrischen Ladestation (10) aufweist und das elektrische Ladekabel (30) ferner vier Kommunikationsleitungen (41, 42, 43, 44) zur Kommunikation zwischen der elektrischen Ladestation (10) und dem Fahrzeug (20) aufweist, wobei die vier Kommunikationsleitungen (41, 42, 43, 44) für eine Ethernet-Kommunikationsverbindung zwischen der elektrischen Ladestation (10) und dem Fahrzeug (20) eingerichtet sind.

7. System (1) nach Anspruch 6, wobei zwei der vier Kommunikationsleitungen (41, 42, 43, 44) zum Senden von Daten und die beiden anderen der vier Kommunikationsleitungen (41, 42, 43, 44) zum Empfangen von Daten eingerichtet sind.

8. System (1) nach Anspruch 6 oder 7, wobei die vier Kommunikationsleitungen (41, 42, 43, 44) an ihren Enden auf einer Kreisfläche eines elektrischen Kontaktstifts (40) des elektrischen Ladekabels (30) angeordnet sind.

9. Verfahren zum Übertragen von Daten im Rahmen einer Fahrzeugkommunikation zwischen einer elektrischen Ladestation (10) und einem Fahrzeug (20) mit einer Traktionsbatterie (27), **dadurch gekennzeichnet, dass** die Fahrzeugkommunikation mittels einer Ethernet-Kommunikationsverbindung erfolgt, wobei die Daten mittels einer Ethernet-Kommunikationsverbindung nach dem Time-Sensitive Networking Ethernet-Standard zwischen der elektrischen Ladestation (10) und dem Fahrzeug (20) übertragen werden.

10. Verfahren nach Anspruch 9, wobei sicherheitskritische Befehle oder Informationen als Daten übertragen werden.

11. Verfahren nach Anspruch 9 oder 10, wobei Multimedia-Daten als Daten übertragen werden.

## Claims

1. An electric charging station (10) for electrically charging a traction battery (27) of a vehicle (20), the electric charging station (10) having a first communication interface (11) and a first communication unit (12) connected thereto, wherein the first communication unit (12) is adapted to communicate via Ethernet and the electric charging station (10) is adapted to establish an Ethernet communication link to the vehicle (20), wherein the first communication unit (12) is set up to support a time-sensitive networking Ethernet standard and the electric charging station (10) is set up to establish an Ethernet communication connection with the vehicle (20) in accordance with the supported time-sensitive networking Ethernet standard, wherein the first communication interface (11) is an electrical communication interface and additionally also an optical communication interface.

2. Electric charging station (10) according to claim 1, wherein the electric charging station (10) further comprises at least one second communication unit (18) which is connected to the first communication interface (11) and is set up for communication by means of a communication standard other than Ethernet, wherein in particular the at least one second communication unit (18) is set up for communication by means of powerline communication and/or pulse width modulation.

3. A vehicle (20) having a traction battery (27) which is electrically chargeable by means of an electrical charging station (10), the vehicle (20) having a second communication interface (21) and a third communication unit (22) connected thereto, wherein the third communication unit (22) is adapted to communicate by means of Ethernet, the vehicle (20) **characterized in that** it is adapted to establishing an Ethernet communication connection to the electric charging station (10), the third communication unit (22) being set up to support a time-sensitive networking Ethernet standard and the vehicle (20) being set up to establish an Ethernet communication connection with the electric charging station (10) in accordance with the supported time-sensitive networking Ethernet standard.

4. Vehicle (20) according to claim 3, wherein the second communication interface (21) is an electrical communication interface.

5. Vehicle (20) according to one of claims 3 to 4, wherein the vehicle (20) further comprises at least one fourth communication unit (29) which is connected to the second communication interface (21) and is set up for communication by means of a communication standard other than Ethernet, wherein in particular the at least one fourth communication unit (29) is set up for communication by means of powerline communication and/or pulse width modulation.

6. A system (1) comprising an electric charging station (10) according to any one of claims 1 to 2, a vehicle (20) according to any one of claims 3 to 5 and an electric charging cable (30) for connecting the electric charging station (10) to the vehicle (20) comprising a traction battery (27), wherein the electric charging cable (30) comprises at least one electric charging line (34) for electrically charging the vehicle (20) by means of the electric charging station (10), and the electric charging cable (30) further comprises four communication lines (41, 42, 43, 44) for communication between the electric charging station (10) and the vehicle (20), wherein the four communication lines (41, 42, 43, 44) are arranged for an Ethernet communication connection between the electric charging station (10) and the vehicle (20).

7. The system (1) according to claim 6, wherein two of the four communication lines (41, 42, 43, 44) are arranged to transmit data and the other two of the four communication lines (41, 42, 43, 44) are arranged to receive data.

8. The system (1) according to claim 6 or 7, wherein the four communication lines (41, 42, 43, 44) are arranged at their ends on a circular surface of an electrical contact pin (40) of the electrical charging cable (30).

9. Method for transmitting data as part of a vehicle communication between an electric charging station (10) and a vehicle (20) with a traction battery (27), **characterized in that** the vehicle communication takes place by means of an Ethernet communication link, the data being transmitted between the electric charging station (10) and the vehicle (20) by means of an Ethernet communication link in accordance with the Time-Sensitive Networking Ethernet standard.

10. The method according to claim 9, wherein safety-critical commands or information are transmitted as data.

11. The method according to claim 9 or 10, wherein multimedia data is transmitted as data.

## Revendications

1. Station de charge électrique (10) pour charger électriquement une batterie de traction (27) d'un véhicule (20), la station de charge électrique (10) comprenant une première interface de communication (11) et une première unité de communication (12) connectée à celle-ci, dans laquelle la première unité de communication (12) est adaptée pour communiquer au moyen d'Ethernet et la station de charge électrique (10) est adaptée pour établir une liaison de communication Ethernet avec le véhicule (20), dans lequel la première unité de communication (12) est agencée pour supporter un standard Time-Sensitive Networking Ethernet et la station de charge électrique (10) est agencée pour établir une liaison de communication Ethernet selon le standard Time-Sensitive Networking Ethernet supporté avec le véhicule (20), la première interface de communication (11) étant une interface de communication électrique et en outre également une interface de communication optique.

2. Station de charge électrique (10) selon la revendication 1, dans laquelle la station de charge électrique (10) comprend en outre au moins une deuxième unité de communication (18) qui est connectée à la première interface de communication (11) et qui est agencée pour communiquer au moyen d'un standard de communication autre qu'Ethernet, dans laquelle en particulier ladite au moins une deuxième unité de communication (18) est agencée pour communiquer au moyen d'une communication par courant porteur en ligne et/ou d'une modulation de largeur d'impulsion.

3. Véhicule (20) comprenant une batterie de traction (27) qui peut être chargée électriquement au moyen d'une station de charge électrique (10), le véhicule (20) comprenant une deuxième interface de communication (21) et une troisième unité de communication (22) connectée à celle-ci, dans lequel la troisième unité de communication (22) est adaptée pour communiquer au moyen d'Ethernet, le véhicule (20) étant **caractérisé en ce qu'**il est adapté pour, établir une liaison de communication Ethernet avec la station de charge électrique (10), la troisième unité de communication (22) étant agencée pour prendre en charge une norme de mise en réseau Ethernet sensible au temps, et le véhicule (20) étant agencé pour établir une liaison de communication Ethernet selon la norme de mise en réseau Ethernet sensible au temps prise en charge avec la station de charge électrique (10).

4. Véhicule (20) selon la revendication 3, dans lequel la deuxième interface de communication (21) est une interface de communication électrique.

5. Véhicule (20) selon l'une quelconque des revendications 3 à 4, dans lequel le véhicule (20) comprend en outre au moins une quatrième unité de communication (29) connectée à la deuxième interface de communication (21) et agencée pour communiquer au moyen d'un standard de communication autre qu'Ethernet, dans lequel en particulier ladite au moins une quatrième unité de communication (29) est agencée pour communiquer au moyen d'une communication par courant porteur en ligne et/ou d'une modulation de largeur d'impulsion.

6. Système (1) comprenant une station de charge électrique (10) selon l'une des revendications 1 à 2, un véhicule (20) selon l'une des revendications 3 à 5 et un câble de charge électrique (30) pour connecter la station de charge électrique (10) au véhicule (20) comprenant une batterie de traction (27), le câble de charge électrique (30) comprenant au moins une ligne de charge électrique (34) pour charger électriquement le véhicule (20) au moyen de la station de charge électrique (10) et le câble de charge électrique (30) comprenant en outre quatre lignes de communication (41, 42, 43, 44) pour la communication entre la station de charge électrique (10) et le véhicule (20), les quatre lignes de communication (41, 42, 43, 44) étant adaptées pour une liaison de communication Ethernet entre la station de charge électrique (10) et le véhicule (20).

7. Système (1) selon la revendication 6, dans lequel deux des quatre lignes de communication (41, 42, 43, 44) sont agencées pour émettre des données et les deux autres des quatre lignes de communication (41, 42, 43, 44) sont agencées pour recevoir des données.

8. Système (1) selon la revendication 6 ou 7, dans lequel les quatre lignes de communication (41, 42, 43, 44) sont disposées à leurs extrémités sur une surface circulaire d'une broche de contact électrique (40) du câble de charge électrique (30).

9. Procédé de transmission de données dans le cadre d'une communication de véhicule entre une station de charge électrique (10) et un véhicule (20) avec une batterie de traction (27), **caractérisé en ce que** la communication de véhicule s'effectue au moyen d'une liaison de communication Ethernet, les données étant transmises au moyen d'une liaison de communication Ethernet selon la norme Time-Sensitive Networking Ethernet entre la station de charge électrique (10) et le véhicule (20).

10. Procédé selon la revendication 9, dans lequel des instructions ou des informations critiques pour la sécurité sont transmises sous forme de données.

11. Procédé selon la revendication 9 ou 10, dans lequel des données multimédia sont transmises en tant que données.
